# EUROPÄISCHE PATENTSCHRIFT

(11) **EP 1 215 142 B1**
(45) Veröffentlichungstag und Bekanntmachung des Hinweises auf die Patenterteilung: **11.08.2004**
(21) Anmeldenummer: 01128207.6
(22) Anmeldetag: 28.11.2001
(51) Int. Cl.: B65G 19/02

(54) **Schienenführbares Fördermittel und Fördersystem**
Rail-guided conveyor device and conveyor system
Dispositif de transport guidé sur rail et système de transport

(30) Priorität: 18.12.2000 CH 24632000
(43) Veröffentlichungstag der Anmeldung: 19.06.2002
(73) Patentinhaber: Ferag AG, 8340 Hinwil (CH)
(72) Erfinder: Honegger, Werner, 8806 Bäch (CH)
(74) Vertreter: Patentanwälte Schaad, Balass, Menzl & Partner AG

(56) Entgegenhaltungen:
- DE-A- 19 538 350
- US-A- 3 807 314
- US-A- 4 114 539
- US-A- 4 718 349
- US-A- 5 222 587

## Beschreibung

Die Erfindung betrifft ein schienenführbares Fördermittel nach dem Oberbegriff von Anspruch 1 sowie ein Fördersystem nach dem Oberbegriff von Anspruch 14.

Ein schienenführbares Fördermittel für Druckereiprodukte ist aus der CH 382768 bekannt. Mit einer Mehrzahl von mit einer Schiene fest verbundenen Fördermitteln werden Druckereiprodukte gefasst, entlang der Schiene gefördert und an einer entfernten Stelle wieder abgelegt.

Ein weiteres Fördermittel für flächigen Produckt ist aus der WO 99/33730 bekannt. Ein Fördersystem, in dem dieses Fördermittel eingesetzt werden kann, ist in der WO 99/33731 beschrieben. Das Fördermittel umfasst ein in Förderrichtung V-förmig ausgebildetes Führungsteil, ein fest am Führungsteil angeordnetes Tragteil zum Halten eines Produktes und ein Ankopplungsteil, welches an ein Antriebsmittel ankoppelbar ausgestaltet ist. Als Antriebsmittel dienen beispielsweise kontinuierlich angetriebene und in Förderrichtung bewegte Körper oder Elemente, die eine magnetische Kraft von stationären, entlang der Bewegungsbahn angeordneten Magneten auf die Fördermittel bzw. deren Ankopplungsteile übertragen. Das Ankopplungsteil ist beim bekannten Fördermittel fest am Führungsteil befestigt. Die Stärke der Kopplung ist daher hauptsächlich durch die Stärke und Anordnung der Magnete bestimmt. An Stellen, an denen eine starke Vorwärtsbewegung der Fördermittel gewünscht ist, werden Magnete in grösserer Dichte und/oder stärkere Magnete angeordnet, während an anderen Stellen, z.B. im Bereich einer Pufferstrecke, weniger oder keine Magnete vorgesehen werden.

Dieses Konzept ist dann problematisch, wenn an derselben Stelle der Bewegungsbahn unterschiedliche Fördergeschwindigkeiten realisiert werden sollen, insbesondere wenn Fördermittel temporär gestoppt und anschliessend einzeln oder als Gruppe mit der ursprünglichen Geschwindigkeit weiterbefördert werden sollen. Zwar ist es bekannt, die Fortbewegung der Fördermittel zur Realisierung einer Pufferstrecke mechanisch mit Rückhalteelementen zu blockieren. Wegen der unveränderten Kopplung tritt durch den Mitnahmeeffekt des Antriebsmittels jedoch ein mechanischer Verschleiss auf, wodurch die Kopplung und der Zustand des Rückhalteelements langfristig beeinträchtigt werden kann. Um die den Verschleiss bewirkende Kraft zu reduzieren, ist es bekannt, im Bereich einer Pufferstrecke weniger Magnete anzuordnen. Dieses hat jedoch den Nachteil, dass das Weiterfördern beim Entfernen des Rückhalteelements ebenfalls nur mit reduzierten Kraft und damit verlangsamt erfolgt.

Die US 5,222,587 offenbart ein Fördermittel, das mittels Reibung an einem kontinuierlich bewegten Antriebsriemen gekoppelt ist. Durch ein bewegbares Ankopplungsteil ist die Stärte der Ankopplung variabel.

Der Erfindung liegt die Aufgabe zugrunde, ein Fördermittel und ein Fördersystem bereitzustellen, bei dem die genannten Nachteile vermieden werden und ein möglichst verschleissarmes Parken bzw. Puffern und verzögerungarmes Weiterfördern möglich ist.

Diese Aufgabe wird gelöst durch ein schienenführbares Fördermittel mit den Merkmalen von Anspruch 1. Die Aufgabe wird weiterhin gelöst durch ein Fördersystem mit den Merkmalen von Anspruch 14. Vorteilhafte Weiterbildungen des Fördermittels und des Fördersystems sind in den abhängigen Ansprüchen, der Beschreibung und den Zeichnungen beschrieben.

Erfindungsgemäss wird bei einem schienenführbaren Fördermittel zum Fördern von insbesondere flächigen Produkten mit einem Führungsteil, einem am Führungsteil angeordneten Tragteil und einem an ein Antriebsmittel ankoppelbaren Ankopplungsteil das Ankopplungsteil so gestaltet, dass die Stärke der Ankopplung an das Antriebsmittel variabel ist. Damit kann die vorwärtstreibende Kraft durch direkte Einwirkung auf das Fördermittel verändert werden, vorzugsweise durch mechanische Einwirkung mittels in der Bewegungsbahn befindlicher Hindernisse, die z.B. Rückhalteelemente oder bereits gestoppte Fördermittel sein können. Es tritt weniger Verschleiss der beteiligten mechanischen Komponenten auf. Des weiteren kann die Kopplung ohne wesentliche zeitliche Verzögerung in voller Stärke wiederhergestellt werden.

Bei einem erfindungsgemässen Fördersystem werden ebenfalls Fördermittel mit einem Ankopplungsteil verwendet, das eine Variation der Ankopplungstärke zulässt. Das Fördersystem weist vorzugsweise wenigstens ein schaltbares Rückhalteelement auf, das im Bereich der Bewegungsbahn der Fördermittel angeordnet ist. Das Rückhalteelement kann das Fördermittel stoppen, indem es am Ankopplungsteil, am Führungsteil oder am Tragteil angreift. Das Ankopplungsteil ist dabei vorzugsweise so ausgebildet, dass das daran angreifende Rückhalteelement eine Reduzierung der Ankopplungsstärke bewirkt, z.B. indem es das Ankopplungsteil vom Antriebsmittel wegbewegt.

Durch die Erfindung wird bei Fördersystemen eine höhere Flexibilität erreicht, insbesondere hinsichtlich des individuellen Bewegens und Stoppens von Fördermitteln, da die Veränderung der vorwärtstreibenden Kraft nicht am Fördersystem selbst vorgenommen werden muss, sondern an den Fördermitteln erfolgt. Die Erfindung ermöglicht vorteilhaft, mit demselben Fördersystem Fördermittel sowohl mit hoher Förderkraft zu transportieren als auch an beliebigen Stellen der Bewegungsbahn mit geringem Verschleiss und geringer Rückhaltekraft zu puffern. Die Ankopplung an das Antriebsmittel kann erfindungsgemäss weitgehend ohne zeitliche Verzögerung wiederhergestellt werden, so dass einzelne Fördermittel nach dem Abstoppen schnell weitertransportiert werden können. Dazu ist es vorteilhaft, wenn die Ankopplung beim Abstoppen nicht auf Null reduziert wird, sondern auch im gepufferten Zustand eine Rest-Förderkraft wirkt. Des weiteren ist dann auch möglich, eine Anzahl von Fördermitteln, die in einer Pufferstrecke aufeinander aufgefahren sind, als Block weiterzufördern.

Zur Veränderung der Ankopplung auf mechanischem Weg ist das Ankopplungsteil relativ zum Führungsteil zwischen wenigstens einer ersten und einer zweiten Position beweglich, wobei in der zweiten Position eine gegenüber der ersten Position schwächere Ankopplung vorliegt. Das Ankopplungsteil ist dazu beispielsweise schwenkbar mit dem Führungsteil verbunden oder am Führungsteil schwimmend aufgehängt. Bei Krafteinwirkung auf eine erste, vorzugsweise in Förderrichtung weisende Fläche wird eine dem Antriebsmittel zugewandte zweite Fläche bewegt.

Dadurch wird der Abstand zum Antriebsmittel und damit die Kopplung variiert.

Vorzugsweise ist das Fördermittel magnetisch an das Antriebsmittel ankoppelbar, wobei das Ankopplungsteil in diesem Fall wenigstens teilweise aus ferromagnetischem Material besteht. Durch Veränderung des Abstands des Kopplungsteils vom Antriebsmittel kann auf einfache Weise die Stärke der Ankopplung verändert werden.

In einer bevorzugten Ausgestaltung des Fördersystems werden die Fördermittel über Magnetkraft angetrieben, wobei Magnete stationär im Bereich der Bewegungsbahn angeordnet sind und der Antrieb durch sich bewegende Antriebsmittel erfolgt, die die magnetische Kraft auf das Fördermittel übertragen. Die magnetische Ankopplung kann grundsätzlich durch geeignete Gestaltung von Flussteilen erhöht werden, die mit dem Antriebsmittel verbunden sind. Dieses hat den Vorteil, dass grundsätzlich eine hohe Förderkraft bei gleicher Stärke des Magneten realisiert werden kann, wobei in den Bereichen, in denen eine geringere Förderkraft gewünscht ist, z.B. in Pufferstrecken, die Ankopplung durch erfindungsgemässe Einwirkung auf das Fördermittel bzw. dessen Ankopplungsteil vermindert wird.

Ausführungsbeispiele der Erfindung sind in der Zeichnung dargestellt und im folgenden beschrieben. Dabei zeigen rein schematisch:
- Fig. 1: Zwei erfindungsgemässe Fördermittel in einem Fördersystem im Längsschnitt in Förderrichtung;
- Fig. 2: die Anordnung aus Fig. 1 in einem Schnitt in einer Normalebene zur Förderrichtung;
- Fig. 3: ein erfindungsgemässes Fördersystem in einem Schnitt in Förderrichtung;
- Fig. 4: das System aus Fig. 3 in einem Schnitt senkrecht zur Förderrichtung;
- Fig. 5-7: verschiedene Möglichkeiten zum Puffern von Fördermitteln und zum Abruf dieser aus der Pufferstrecke.

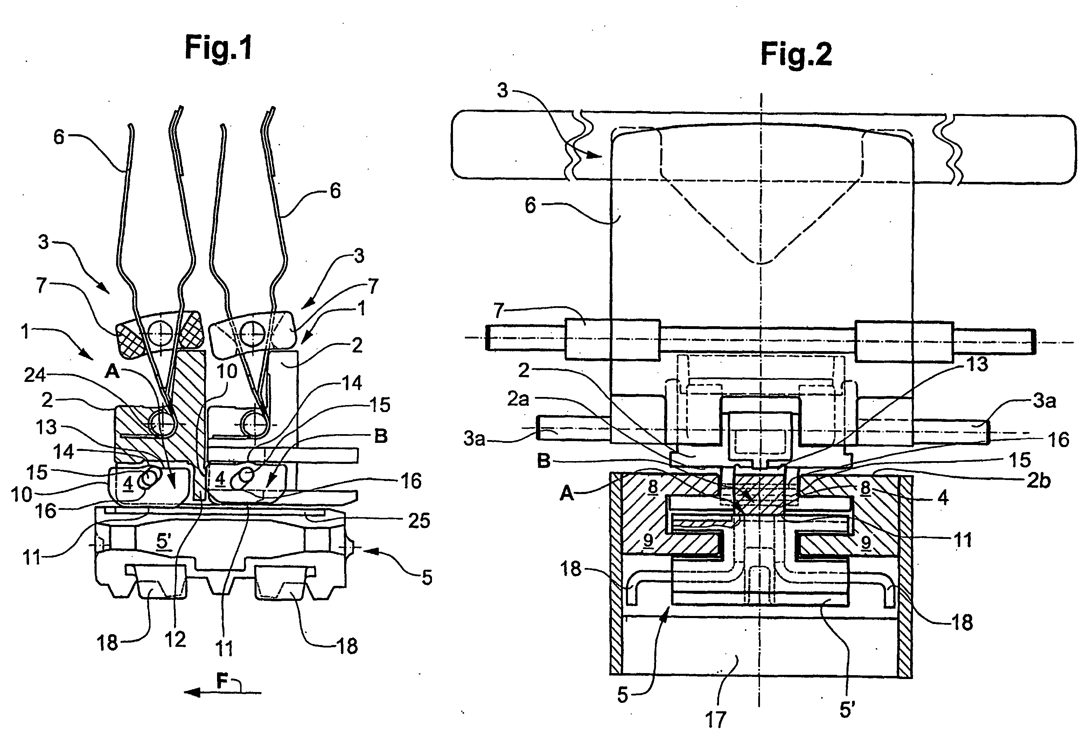

Fig. 1 zeigt ein erfindungsgemässes Fördermittel 1 in einem erfindungsgemässen Fördersystem in einem Schnitt in Förderrichtung F; Fig. 2 zeigt dieselbe Anordnung in einem Schnitt in einer Normalebene zur Förderrichtung F. Aufbau und Funktionsweise der Fördermittel 1 und des Fördersystems sind aus der WO 99/33730, WO 99/33731 und WO 99/33732 bekannt. Fördermittel 1 und das Fördersystem werden im folgenden daher nur so weit beschrieben, wie für das Verständnis der Erfindung notwendig ist.

In Fig. 1 sind zwei Fördermittel 1 dargestellt, die sich in einer ersten Führungsschiene 8 in Förderrichtung F bewegen können. Sie werden durch ein Antriebsmittel 5 angetrieben, hier eine aus einzelnen Gliedern 5' bestehende Reihe, die durch einen mechanischen Antrieb in Förderrichtung F bewegt wird. Die Glieder 5' gleiten in einer zweiten Führungsschiene 9, die vorzugsweise parallel zur ersten Führungsschiene 8 verläuft. Das Antriebsmittel 5 überträgt eine magnetische Kraft von entlang der zweiten Schiene 9 stationär angeordneten Magneten 17 auf Ankopplungsteile 4 der Fördermittel 1. Dazu weist ein Glied 5' des Antriebsmittels 5 Flussteile 18 auf. Im vorliegenden Beispiel sind zwei einander symmetrisch zur Längsebene des Fördersystems gegenüberliegende Flussteile vorhanden, die jeweils senkrecht zum Magneten 17 und zum Ankopplungsteil 4 weisen, wobei sich die dazwischen eingeschlossene Fläche in Richtung auf das Ankopplungsteil verringert. Auf diese Weise werden die magnetischen Feldlinien gebündelt, und es wird ein hohes Feld und damit eine hohe Ankopplung des Fördermittels erzielt.

Die Fördermittel 1 bestehen aus einem Führungsteil 2, einem Tragteil 3 und einem Ankopplungsteil 4. Das Führungsteil 2 gleitet in der ersten Führungsschiene 8. Es weist dazu beispielsweise jeweils zwei seitlich in Förderrichtung F angeordnete Führungen 2a, 2b auf, die mit der ersten Führungsschiene 8 zusammenwirken. Im vorliegenden Beispiel ist das Führungsteil 2 in einer Normalebene zur Förderrichtung F H-förmig ausgestaltet, wie in Fig. 2 gezeigt. Um Produkte in möglichst dichter Folge und dennoch in einer stabilen Lage fördern zu können, ist das Führungsteil 2 in Förderrichtung vorzugsweise V-förmig gestaltet (hier nicht dargestellt). Am Führungsteil ist das Tragteil vorzugsweise um eine senkrecht zur Förderrichtung F verlaufende Achse 24 schwenkbar befestigt. Das Tragteil 3 besteht aus einer Klammer 6, die mit einem Schieber 7 geöffnet oder geschlossen werden kann. Der Schieber 7 kann beispielsweise über eine Kulisse bewegt werden.

Erfindungsgemäss ist das Ankopplungsteil 4 nicht fest mit dem Führungsteil 2 verbunden, sondern zwischen einer ersten Position A, wie beim in Förderrichtung F vorderen Fördermittel gezeigt, und einer zweiten Position B, wie beim in Förderrichtung F hinteren Fördermittel gezeigt, beweglich. In der Position A berührt das Ankopplungsteil 4 die Gleitfläche 25 des Antriebsmittels 5, die aus einem reibungsverminderten Material besteht. In Position A ist daher die Ankopplung des Fördermittels 1 an das Antriebsmittel 5 am stärksten. In Position B ist das Ankopplungsteil 4 von der Gleitfläche 25 beabstandet, und die Ankopplung daher reduziert.

Erfindungsgemäss ist das Ankopplungsteil 4 zwischen den Positionen A und B beweglich. Die Bewegungsmöglichkeit wird durch geeignete Lagerung des Ankopplungsteils 4 innerhalb des Führungteils 2 realisiert. Im vorliegenden Beispiel wird das Ankopplungsteil 4 bei Druck auf die in Förderrichtung F vorne liegende erste Fläche 10 innerhalb des Führungsteils 2 entgegen der Förderrichtung F bewegt; gleichzeitig wird seine dem Antriebsmittel zugewandte zweite Fläche 11 von der Gleitfläche 25 weggedrückt. Dazu ist das Ankopplungsteil 4 im wesentlichen quaderförmig ausgestaltet und in einer ebenfalls im wesentlichen quaderförmigen Aussparung 13 innerhalb des Führungsteils 2 so gelagert, dass es seitlich weitgehend unbeweglich ist, in Förderrichtung F sowie in Richtung auf das Antriebsmittel jedoch ein geringes Spiel aufweist. Die Aussparung 13 ist sowohl zum Antriebsmittel hin als auch in Förderrichtung F offen. Damit kann einerseits der Kontakt mit der Gleitfläche 25 hergestellt werden. Zum anderen kann von aussen mechanisch auf das Ankopplungsteil eingewirkt werden, um dieses von der Gleitfläche 25 wegzudrücken. Das Ankopplungsteil 4 ist mittels zwei seitlich angeordneten Stiften 15 in einer länglichen und schräg zur Förderrichtung orientierten Führungsnut 16 im Führungsteil auf die beschriebene Weise beweglich.

Die Abmessungen des Ankopplungsteils 4 sind so gewählt, dass die erste Fläche 10 in der Position A des Ankopplungsteil den in Förderrichtung F vordersten Bereich des Fördermittels 1 bildet. Damit wird das Ankopplungsteil 4 in die zweite Position B bewegt, wenn das Fördermittel 1 auf ein Hindernis, beispielsweise ein Rückhalteelement oder ein bereits gestopptes oder mit geringerer Geschwindigkeit bewegtes weiteres Fördermittel, auffährt. In Fig. 1 ist das in Förderrichtung F hintere Fördermittel auf das vordere Fördermittel aufgefahren, so dass sein Ankopplungsteil 4 durch die als Anschlag 12 wirkende Rückseite des vorderen Fördermittels in die zweite Position B bewegt wurde.

Das Ankopplungsteil 4 weist an der dem Antriebsmittel 5 abgewandten Seite einen punktförmigen oder quer zur Förderrichtung F ausgerichteten Fortsatz 14 auf. Mit diesem liegt das Ankopplungsteil 4 an der Innenfläche der Aussparung 13 derart an, dass es in der zweiten Position B um eine quer zur Förderrichtung F ausgerichtete Achse relativ zum Führungsteil 2 beweglich ist. Durch den Fortsatz 14 wird erreicht, dass sich das Ankopplungsteil 4 nicht in der Aussparung 13 verkantet, sondern bei Nachlassen eines Drucks auf die vordere Fläche 10 aufgrund der Magnetanziehung wieder in die erste Position A zurückkehrt.

In Fig. 2 ist der H-förmige Querschnitt der Führungsteile 2 und der Antriebsglieder 5' gezeigt.

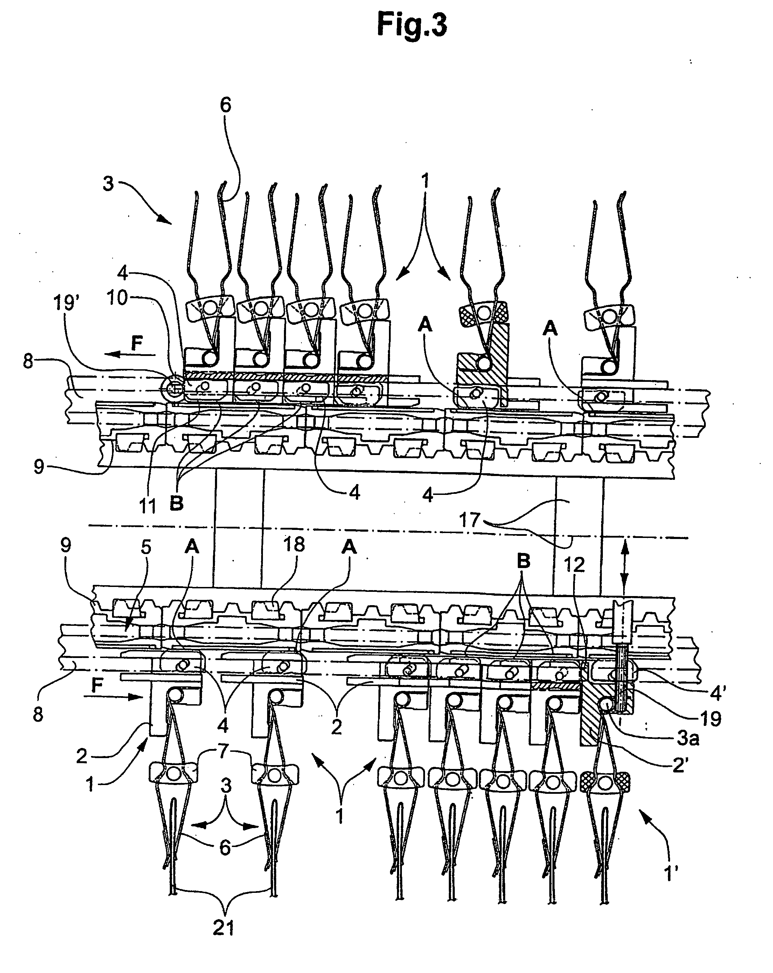

In Fig. 1 ist das stehende Fördern, in Fig. 3 sind beide Varianten gezeigt. Beim stehenden Fördern wird durch den Druck auf die vordere Fläche 10 des Ankopplungsteils sowohl die Schwerkraft als auch die Magnetkraft überwunden und das Ankopplungsteil in die zweite Position B befördert. Beim hängenden Fördern muss, unterstützt durch die Schwerkraft, lediglich die Magnetanziehung überwunden werden.

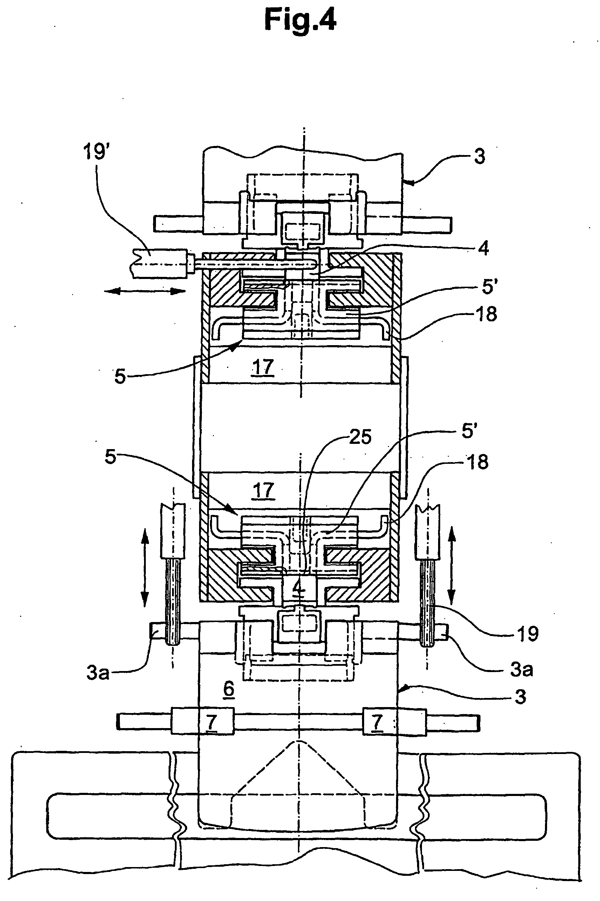

Die Fig. 3 und 4 zeigen ein Beispiel für die Anwendung der Erfindung zur Bildung einer Pufferstrecke sowohl beim hängenden als auch beim stehenden Fördern innerhalb desselben Fördersystems. Fig. 3 zeigt dazu eine Seitenansicht und Fig. 4 eine Ansicht in einer Normalebene zur Förderrichtung F.

Wie bereits beschrieben, gleiten eine Mehrzahl von Fördermitteln 1 in einer ersten Führungsschiene 8 und werden durch ein umlaufendes Antriebsmittel 5 in Förderrichtung F bewegt. Das Fördersystem besteht hier aus einem unteren Bereich, in dem Produkte 21 hängend gefördert werden, und einem oberen Bereich, in dem leere Fördermittel 1 stehend, d.h. mit nach oben weisender Klammer 6 transportiert werden. Im Bereich zwischen den unteren und den oberen Führungsschienen 8, 9 befinden sich stationäre Magnete 17. Ein Rückhalteelement 19 im unteren Bereich des Fördersystems hält ein erstes Fördermittel 1' im Bereich seines Tragteils bzw. von seitlichen Fortsätzen 3a davon. Das Ankopplungsteil 4' des ersten Fördermittels 1' wird nicht berührt, so dass es sich in der ersten Position A mit maximaler Ankopplung an das Antriebsmittel 5 befindet. Auf das erste Fördermittel 1' sind weitere Fördermittel 1 aufgelaufen. Ihre Ankopplungsteile 4 berühren jeweils die Rückseite 12 des vorangehenden Fördermittels und sind so in die zweite Position B mit verminderter Ankopplung an das Antriebsmittel 5 gezwungen. Weitere ankommende Fördermittel, die voneinander und von den bereits gestoppten Fördermitteln beabstandet sind, sind mit ihren Ankopplungsteilen 4, die sich in der ersten Position A befinden, maximal an das Antriebsmittel 5 angekoppelt. Auf die bereits gepufferten Fördermittel wird wegen der verminderten Ankopplung weniger Förderkraft ausgeübt, wodurch der Verschleiss der Ankopplungsteile 4 und der zum Stoppen verwendeten Rückhalteelemente 19 vermindert wird. Das Rückhalteelement muss lediglich eine verminderte Rückhaltekraft ausüben.

Indem sich das erste Fördermittel 1' in der ersten Position A befindet, wirkt unmittelbar beim Loslassen des Rückhalteelements 19 die volle Förderkraft, so dass das erste Fördermittel beim Loslassen maximal beschleunigt wird und die volle Transportgeschwindigkeit schnell erreicht. Die weiteren gepufferten Fördermittel 1 bewegen sich dann, bis das Vorderste an das Rückhalteelement 19 anschlägt.

Im oberen Teil des Fördersystems ist eine weitere Pufferstrecke gezeigt, bei der sich sämtliche Fördermittel 1 im Zustand B mit minimaler Ankopplung befinden. Dazu wird ein Rückhalteelement 19' so in den Förderweg gefahren, dass seine vordere Spitze die vordere Fläche 10 eines Ankopplungsteils 4 berührt und das Ankopplungsteil 4 durch den Gegendruck in die Position B bringt. Auf diese Weise lässt sich also eine Pufferstrecke konstruieren, bei der die Ankopplung der darin befindlichen Fördermittel vermindert ist und somit ein geringer Verschleiss der beteiligten Komponenten auftritt. Die gepufferten Fördermittel 1 können einzeln freigegeben werden, indem das Rückhalteelement 19' aus der Bewegungsbahn gebracht wird. Das Ankopplungsteil 4 des vordersten Fördermittels 1 wird dann durch die Magnetwirkung wieder in die erste Position A gebracht, so dass das Fördermittel danach mit der vollen Förderkraft gefördert wird.

Fig. 4 zeigt die Anordnung aus Fig. 3 in einer Normalebene zur Förderrichtung. Das am Tragteil 3 bzw. an seitlichen Fortsätzen 3a davon angreifende Rückhalteelement 19 wird zum Freigeben bzw. Anhalten eines Fördermittels nach oben oder unten verfahren oder um ein senkrecht zur Förderrichtung verlaufende Achse geschwenkt. Das am Ankopplungsteil 4 angreifende Rückhalteelement 19' wird zum Anhalten oder Freigeben eines Fördermittels linear seitlich verfahren oder in die bzw. aus der Bewegungsbahn geschwenkt.

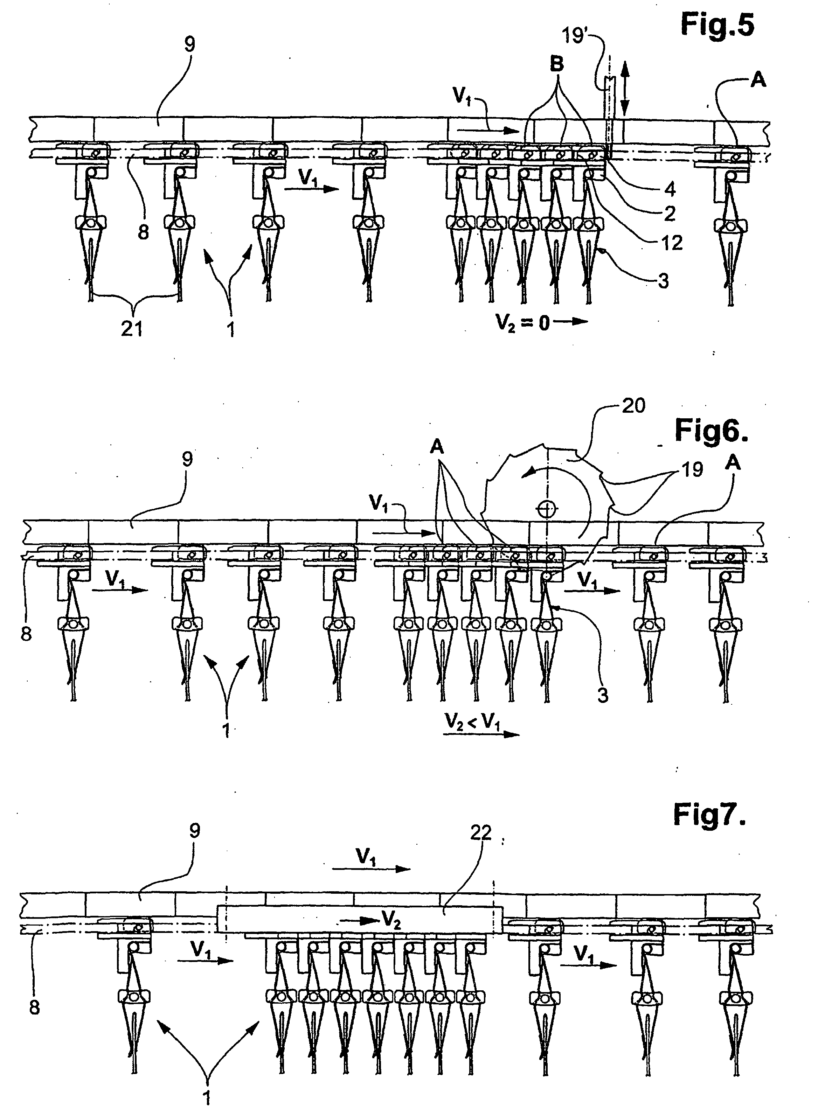

In den Fig. 5 bis 7 sind weitere Beispiele für den Aufbau von Pufferstrecken und den Abruf einzelner Fördermittel 1 aus einer solchen Pufferstrecke gezeigt.

Fig. 5 zeigt eine Pufferstrecke, bei der die Fördermittel 1 mit einem an ihrem Kopplungsteil 4 angreifenden Rückhalteelement 19' bzw. durch Auflaufen auf die als Anschlag 12 wirkende Rückseite des vorhergehenden Fördermittels von einer ursprünglichen Fördergeschwindigkeit V1 auf eine Fördergeschwindigkeit V2, die hier Null ist, abgebremst werden. Diese Anordnung wurde bereits im oberen Teil von Fig. 3 für den Fall stehender Fördermittel gezeigt und in der entsprechenden Figurenbeschreibung erläutert.

Fig. 6 zeigt ein weiteres Beispiel für eine Pufferstrecke, in der die ursprünglich mit Geschwindigkeit V1 bewegten Fördermittel 1 nicht völlig abgebremst, sondern nur auf eine Geschwindigkeit V2, die kleiner als V1 ist, gebracht werden. Eine Reihe von Rückhalteelementen 19 sind dabei an einem sich drehenden Rad 20 angebracht. Die Anschläge greifen wie im Zusammenhang mit Fig. 3 unterer Teil beschrieben, am Tragteil 3 bzw. Fortsatz 3a des Fördermittels kurzzeitig an und geben das Fördermittel im Laufe der weiteren Drehung wieder frei. Wie bereits beschrieben, bleibt die Kopplung mit dem Antriebsmittel 5 in diesem Fall voll erhalten, so dass das jeweils vom Rückhalteelement 19 gehaltene Fördermittel nach seiner Freigabe der vollen Förderwirkung ausgesetzt ist. Eine Anzahl von Fördermitteln staut sich jedoch vor dem Rad, wobei durch das kontinuierliche Zuführen und das kontinuierliche Freigeben von Fördermitteln innerhalb des gestauten Blocks eine insgesamt verminderte Fördergeschwindigkeit V2 erreicht wird. Vorliegend ist die Umdrehungsgeschwindigkeit des Rades 20 so an die Fördergeschwindigkeit V1 und den Abstand der einzelnen ankommenden Fördermittel angepasst, dass die Fördermittel innerhalb der Stauzone nicht aufeinander auflaufen und daher die Kopplung mit dem Antriebsmittel voll erhalten bleibt. Durch entsprechende Anpassung der Umdrehungsgeschwindigkeit kann jedoch auch erreicht werden, dass sich die Ankopplungsteile in der Stauzone in der Position B, d.h. verminderte Ankopplung, befinden.

Fig. 7 zeigt ein weiteres Beispiel einer solchen Pufferzone. Einzelne Fördermittel 1 laufen mit Geschwindigkeit V1 in einen Schleusenantrieb 22 hinein, in dem sie mit Geschwindigkeit V2 bewegt werden. Entsprechend dem Verhältnis von V1 zu V2 wird der Abstand zwischen den Fördermitteln verkleinert oder vergrössert. Die Fördermittel verlassen den Schleusenantrieb 22 kontinuierlich und erreichen wieder die erste Fördergeschwindigkeit V1, werden allerdings mit verändertem Abstand D gefördert, der von der Geschwindigkeit V1, V2 und vom ursprünglichen Förderabstand D0 abhängt.

## Patentansprüche

1. Schienenführbares Fördermittel (1, 1') zum Fördern von insbesondere flächigen Produkten (21) in eine Förderrichtung (F) mit einem Führungsteil, einem am Führungsteil (2, 2') angeordneten Tragteil (3) zum Halten eines Produktes (21) und einem Ankopplungsteil (4, 4'), das an ein Antriebsmittel (5) ankoppelbar ausgestaltet ist, wobei das Ankopplungsteil (4, 4') zur Variation der Stärke der Ankopplung relativ zum Führungsteil (2, 2') zwischen wenigstens einer ersten Position (A) und einer zweiten Position (B), in der eine gegenüber der ersten Position (A) schwächere Ankopplung vorliegt, beweglich ist und wobei das Ankopplungsteil (4, 4') eine erste Fläche (10), die im Anwendungsfall in Förderrichtung (F) vorne liegt, und eine zweite Fläche (11), die im Anwendungsfall dem Antriebsmittel (5) zugewandt ist, aufweist, **dadurch gekennzeichnet, dass** die zweite Fläche (11) im wesentlichen parallel zu sich selbst verschoben und dadurch vom Antriebsmittel (5) wegbewegt wird, wenn auf die erste Fläche (10) eine Kraft im wesentlichen entgegen der Förderrichtung (F) ausgeübt wird.

2. Fördermittel (1 1') nach Anspruch 1, **dadurch gekennzeichnet, dass** das Ankopplungsteil (4, 4') schwenkbar mit dem Führungsteil (2, 2') verbunden oder am Führungsteil (2, 2') schwimmend aufgehängt ist.

3. Fördermittel (1, 1') nach einem der Ansprüche 1 oder 2, **dadurch gekennzeichnet, dass** die erste Fläche (10) die in Förderrichtung (F) vordere Fläche des Führungsteils (2, 2') wenigstens in der ersten Position (A) teilweise überragt.

4. Fördermittel (1, 1') nach einem der vorangegangenen Ansprüche, **dadurch gekennzeichnet, dass** die erste Fläche (10) eben ist und vorzugsweise senkrecht zur Förderrichtung orientiert ist.

5. Fördermittel (1, 1') nach einem der vorangegangenen Ansprüche, **dadurch gekennzeichnet, dass** die zweite Fläche (11) eben ist und vorzugsweise parallel zur Förderrichtung orientiert ist.

6. Fördermittel (1, 1') nach einem der Ansprüche 1-5, **dadurch gekennzeichnet, dass** der Hub der zweiten Fläche (11) zwischen 0,5 und 5 mm beträgt.

7. Fördermittel (1, 1') nach einem der vorangegangenen Ansprüche, **dadurch gekennzeichnet, dass** das Ankopplungsteil (4, 4') im wesentlichen quaderförmig gestaltet ist und in einer in Förderrichtung (F) und zum Antriebsmittel (5) hin offenen, im wesentlichen quaderförmigen Aussparung (13) im Führungsteil ( 2, 2') angeordnet ist.

8. Fördermittel (1, 1') nach einem der vorangegangegen Ansprüche, **dadurch gekennzeichnet, dass** das Ankopplungsteil (4, 4') wenigstens im zweiten Zustand (B) um eine quer zur Förderrichtung (F) ausgerichtete Achse relativ zum Führungsteil (2, 2') beweglich ist, vorzugsweise indem es an seiner dem Antriebsmittel (5) abgewandten Seite einen Fortsatz (14) aufweist, der im zweiten Zustand (B) an einer Innenfläche der Aussparung (13) anliegt und eine Schwenkbewegung ermöglicht.

9. Fördermittel (1, 1') nach einem der vorangegangegen Ansprüche, **dadurch gekennzeichnet, dass** das Ankopplungsteil (4, 4') zur Aufhängung innerhalb des Führungsteils (2, 2') an seinen parallel zur Förderrichtung (F) ausgerichteten Seiten Stifte (15) aufweist, die in länglichen, schräg zur Förderrichtung (F) ausgerichteten Führungsnuten (16) des Führungsteils (2, 2') zu gleiten imstande sind.

10. Fördermittel (1, 1') nach einem der einem der vorangegangegen Ansprüche, **dadurch gekennzeichnet, dass** es an seiner in Förderrichtung (F) gesehen hinteren Seite einen Anschlag (12) aufweist, durch den das Ankopplungsteil (4, 4') eines weiteren Fördermittels (1, 1'), das an den Anschlag (12) anstösst, von der ersten Position (A) in die zweite Position (B) bewegt wird.

11. Fördermittel (1, 1') nach einem der vorangegangenen Ansprüche, **dadurch gekennzeichnet, dass** das Ankopplungsteil (4, 4') wenigstens teilweise aus einem ferromagnetischen Material besteht.

12. Fördermittel (1, 1') nach einem der vorangegangenen Ansprüche, **dadurch gekennzeichnet, dass** das Führungsteil (2, 2') in Förderrichtung (F) V-förmig verläuft, wobei es vorzugsweise eine Dreipunktabstützung ausbildet.

13. Fördermittel (1, 1') nach einem der vorangegangenen Ansprüche, **dadurch gekennzeichnet, dass** das Führungsteil (2, 2') zwei seitlich in Förderrichtung (F) angeordnete Führungen (2a, 2b) aufweist, in die im Anwendungsfall Führungsschienen (8) eines Fördersystems eingreifen, wobei das Führungsteil (2, 2') vorzugsweise in einer Normalebene zur Förderrichtung H-förmig ausgestaltet ist.

14. Fördersystem mit einer ersten Führungssschiene (8) mit wenigstens einem Fördermittel (1, 1') nach einem der Ansprüche 1-13, die in der Führungsschiene (8) individuell beweglich sind, und einer zweiten Führungsschiene (9) mit einem daran geführten Antriebsmittel (5), das ein derartiges Koppeln an ein Ankopplungsteil (4, 4') des Fördermittels (1, 1') zulässt, dass das Fördermittel (1, 1') im angekoppelten Zustand vom Antriebsmittel (5) beweglich ist.

15. Fördersystem nach Anspruch 14, **dadurch gekennzeichnet, dass** die Ankopplung eines Fördermittels (1, 1') an das Antriebsmittel (5) magnetisch erfolgt, indem eine Mehrzahl von Magneten (17) entlang der zweiten Führungsschiene (9) angeordnet sind und die Antriebsmittel (5) die magnetische Kraft vorzugsweise mittels ferromagnetischer Flussteile (18) auf ein Ankopplungsteil (4, 4') eines Fördermittels (1, 1') übertragen.

16. Fördersystem nach Anspruch 15, **dadurch gekennzeichnet, dass** jeweils zwei Flussteile (18) einander gegenüberliegen und im Bereich des Magneten (17) und der ersten Führungsschiene (8) im wesentlichen senkrecht zum Magneten (17) bzw. zum Fördermittel (1, 1') ausgerichtet sind, wobei der Abstand der Flussteile (18) im Bereich der ersten Führungsschiene (8) gegenüber dem Abstand im Bereich des Magneten (17) verringert ist.

17. Fördersystem nach einem der Ansprüche 14 bis 16, **dadurch gekennzeichnet, dass** im Bereich der ersten Führungsschiene (8) wenigstens ein schaltbares Rückhalteelement (19, 19') angeordnet ist, das ein Fördermittel (1, 1') zu stoppen imstande ist.

18. Fördersystem nach Anspruch 17, **dadurch gekennzeichnet, dass** das Rückhalteelement (19, 19') am Ankopplungsteil (4, 4') oder am Führungsteil (2, 2') oder am Tragteil (3) angreift.

## Claims

1. Rail-guidable conveying means (1, 1') for conveying, in particular, sheet-like products (21) in a conveying direction (F), having a guide part, a carrying part (3), which is arranged on the guide part (2, 2') and is intended for retaining a product (21), and a coupling part (4, 4'), which is configured such that it can be coupled to a drive means (5), **characterized in that**, for varying the strength of the coupling, the coupling part (4, 4') can be moved relative to the guide part (2, 2') between at least a first position (A) and a second position (B), in which the coupling is weaker than in the first position (A), and **characterized in that** the coupling part (4, 4') has a first surface (10), which when in use is located at the front, as seen in the conveying direction (F), and a second surface (11), which when in use is directed towards the drive means (5), **characterized in that** the second surface (11) is displaced essentially parallel to itself and, as a result, is moved away from the drive means (5) when the first surface (10) is subjected to a force essentially counter to the conveying direction (F).

2. Conveying means (1, 1') according to Claim 1, **characterized in that** the coupling part (4, 4') is connected pivotably to the guide part (2, 2') or is suspended in a floating manner on the guide part (2, 2').

3. Conveying means (1, 1') according to either of Claims 1 and 2, **characterized in that** the first surface (10) partially projects beyond the front surface of the guide part (2, 2'), as seen in the conveying direction (F), at least in the first position (A).

4. Conveying means (1, 1') according to one of the preceding claims, **characterized in that** the first surface (10) is planar and is preferably oriented perpendicularly to the conveying direction.

5. Conveying means (1, 1') according to one of the preceding claims, **characterized in that** the second surface (11) is planar and is preferably oriented parallel to the conveying direction.

6. Conveying means (1, 1') according to one of Claims 1-5, **characterized in that** the displacement of the second surface (11) is between 0.5 and 5 mm.

7. Conveying means (1, 1') according to one of the preceding claims, **characterized in that** the coupling part (4, 4') is of essentially cuboidal configuration and is arranged in an essentially cuboidal cut-out (13) in the guide part (2, 2'), said cut-out being open in the conveying direction (F) and towards the drive means (5).

8. Conveying means (1, 1') according to one of the preceding claims, **characterized in that**, at least in the second state (B), the coupling part (4, 4') can be moved relative to the guide part (2, 2') about an axis aligned transversely to the conveying direction (F), preferably by it having, on its side which is directed away from the drive means (5), a continuation (14) which, in the second state (B), butts against an inner surface of the cut-out (13) and allows a pivoting movement.

9. Conveying means (1, 1') according to one of the preceding claims, **characterized in that** the coupling part (4, 4'), for suspending within the guide part (2, 2'), has, on its sides aligned parallel to the conveying direction (F), pins (15) which are capable of sliding in elongate guide grooves (16) of the guide part (2, 2'), said grooves being aligned obliquely in relation to the conveying direction (F).

10. Conveying means (1, 1') according to'one of the preceding claims, **characterized in that** on its rear side, as seen in the conveying direction (F), it has a stop (12) by means of which the coupling part (4, 4') of a further conveying means (1, 1') which strikes against the stop (12) is moved from the first position (A) into the second position (B).

11. Conveying means (1, 1') according to one of the preceding claims, **characterized in that** the coupling part (4, 4') at least partially consists of a ferromagnetic material.

12. Conveying means (1, 1') according to one of the preceding claims, **characterized in that** the guide part (2, 2') runs in the form of a V in the conveying direction (F), preferably forming a three-point support in the process.

13. Conveying means (1, 1') according to one of the preceding claims, **characterized in that** the guide part (2, 2') has two guides (2a, 2b) which are arranged laterally in the conveying direction (F) and in which, when in use, guide rails (8) of a conveying system engage, the guide part (2, 2') preferably being of H-shaped configuration in a plane normal to the conveying direction.

14. Conveying system having a first guide rail (8) with at least one conveying means (1, 1') according to one of Claims 1-13 which can be moved individually in the guide rail (8), and having a second guide rail (9) with a drive means (5) which is guided thereon and allows coupling to a coupling part (4, 4') of the conveying means (1, 1') such that, in the coupled state, the conveying means (1, 1') can be moved by the drive means (5).

15. Conveying system according to Claim 14, **characterized in that** the coupling of a conveying means (1, 1') to the drive means (5) takes place magnetically by a plurality of magnets (17) being arranged along the second guide rail (9) and the drive means (5) transmitting the magnetic force to a coupling part (4, 4') of a conveying means (1, 1') preferably by means of ferromagnetic flux parts (18).

16. Conveying system according to Claim 15, **characterized in that** in each case two flux parts (18) are located opposite one another and, in the region of the magnet (17) and of the first guide rail (8), are aligned essentially perpendicularly to the magnet (17) and/or to the conveying means (1, 1'), the spacing between the flux parts (18) in the region of the first guide rail (8) being smaller than the spacing in the region of the magnet (17).

17. Conveying system according to one of Claims 14 to 16, **characterized in that** at least one switchable restraining element (19, 19') is arranged in the region of the first guide rail (8), and is capable of stopping a conveying means (1, 1').

18. Conveying system according to Claim 17, **characterized in that** the restraining element (19, 19') acts on the coupling part (4, 4') or on the guide part (2, 2') or on the carrying part (3).

## Revendications

1. Dispositif de transport guidé sur rails (1, 1') pour le transport en particulier de produits plats (21) dans une direction de transport (F) avec une partie de guidage, une partie de support (3) disposée sur la partie de guidage (2, 2') pour maintenir un produit (21) et une partie de couplage (4, 4') qui peut être couplée à un moyen d'entraînement (5), dans lequel la partie de couplage (4, 4') est mobile entre au moins une première position (A) et une deuxième position (B) dans laquelle on réalise un couplage plus faible que dans la première position (A), pour faire varier l'intensité du couplage par rapport à la partie de guidage (2, 2'), et dans lequel la partie de couplage (4, 4') présente une première face (10), qui dans le présent cas d'application se trouve en avant dans la direction de transport (F), et une deuxième face (11), qui dans le présent cas d'application est tournée vers le moyen d'entraînement (5), **caractérisé en ce que** la deuxième face (11) est déplacée sensiblement parallèlement à elle-même et est ainsi écartée du moyen d'entraînement (5), lorsqu'une force est exercée sur la première face (10) dans le sens contraire à la direction de transport (F).

2. Dispositif de transport (1, 1') selon la revendication 1, **caractérisé en ce que** la partie de couplage (4, 4') est assemblée de façon pivotante à la partie de guidage (2, 2') ou est suspendue de façon flottante à la partie de guidage 2, 2').

3. Dispositif de transport (1, 1') selon l'une quelconque des revendications 1 ou 2, **caractérisé en ce que** la première face (10) dépasse partiellement la face avant dans la direction de transport (F) de la partie de guidage (2, 2'), au moins dans la première position (A).

4. Dispositif de transport (1, 1') selon l'une quelconque des revendications précédentes, **caractérisé en ce que** la première face (10) est plane et est de préférence orientée perpendiculairement à la direction de transport.

5. Dispositif de transport (1, 1') selon l'une quelconque des revendications précédentes, **caractérisé en ce que** la deuxième face (11) est plane et est de préférence orientée parallèlement à la direction de transport.

6. Dispositif de transport (1, 1') selon l'une quelconque des revendications 1 à 5, **caractérisé en ce que** la course de la deuxième face (11) vaut entre 0,5 et 5 mm.

7. Dispositif de transport (1, 1') selon l'une quelconque des revendications précédentes, **caractérisé en ce que** la partie de couplage (4, 4') est de forme sensiblement carrée et est disposée dans un évidement sensiblement carré (13) dans la partie de guidage (2, 2'), ouvert dans la direction de transport (F) et vers le moyen d'entraînement (5).

8. Dispositif de transport (1, 1') selon l'une quelconque des revendications précédentes, **caractérisé en ce que** la partie de couplage (4, 4') est, au moins dans la deuxième position (B), mobile par rapport à la partie de guidage (2, 2') autour d'un axe orienté transversalement à la direction de transport (F), de préférence du fait qu'elle présente sur son côté situé à l'opposé du moyen d'entraînement (5), un bossage (14) qui, dans la deuxième position (B), s'applique contre une face intérieure de l'évidement (13) et permet un mouvement pivotant.

9. Dispositif de transport (1, 1') selon l'une quelconque des revendications précédentes, **caractérisé en ce que** la partie de couplage (4, 4') présente, sur ses côtés orientés parallèlement à la direction de transport (F), des broches destinées à la suspension à l'intérieur de la partie de guidage (2, 2'), qui sont capables de glisser dans des rainures de guidage (16) allongées;de la partie de guidage (2,2'), orientées en oblique par rapport à la direction de transport (F).

10. Dispositif de transport (1, 1') selon l'une quelconque des revendications précédentes, **caractérisé en ce qu'**il comporte une butée (12) sur sa face arrière en regardant dans la direction de transport (F), par laquelle la partie de couplage (4, 4') d'un autre dispositif de transport (1, 1'), qui vient buter contre la butée (12), est déplacée de la première position (A) à la deuxième position (B).

11. Dispositif de transport (1, 1') selon l'une quelconque des revendications précédentes, **caractérisé en ce que** la partie de couplage (4, 4') se compose au moins en partie d'une matière ferromagnétique.

12. Dispositif de transport (1, 1') selon l'une quelconque des revendications précédentes, **caractérisée en ce que** la partie de guidage (2, 2') est en forme de V dans la direction de transport (F), par laquelle il forme de préférence un appui en trois points.

13. Dispositif de transport (1, 1') selon l'une quelconque des revendications précédentes, **caractérisé en ce que** la partie de guidage (2, 2') présente deux guides (2a, 2b) disposés latéralement dans la direction de transport (F), dans lesquels s'engagent, dans le présent cas d'application, des rails de guidage (8) d'un système de transport, dans lequel la partie de guidage (2, 2') est de préférence en forme de H dans un plan normal à la direction de transport.

14. Système de transport avec un premier rail de guidage (8) avec au moins un dispositif de transport (1, 1') selon l'une quelconque des revendications 1 à 13, qui sont mobiles individuellement dans le rail de guidage (8), et avec un deuxième rail de guidage (9) avec un moyen d'entraînement (5) guidé sur celui-ci, qui permet un couplage à une partie de couplage (4, 4') du dispositif de transport (1, 1') de telle façon que le dispositif de transport (1, 1') en position couplée soit déplacé par le moyen d'entraînement (5).

15. Système de transport selon la revendication 14, **caractérisé en ce que** le couplage d'un dispositif de transport (1, 1') au moyen d'entraînement (5) est effectué de façon magnétique, du fait qu'une pluralité d'aimants (17) sont disposés le long du deuxième rail de guidage (9) et que les moyens d'entraînement (5) transmettent la force magnétique de préférence au moyen de pièces de flux ferromagnétiques (18) à une partie de couplage (4, 4') d'un dispositif de transport (1, 1').

16. Système de transport selon la revendication 15, **caractérisé en ce que** chaque fois deux pièces de flux (18) se font face et sont orientées sensiblement perpendiculairement à l'aimant (17) ou au dispositif de transport (1, 1') dans la région de l'aimant (17) et du premier rail de guidage (8), la distance des pièces de flux (18) dans la région du premier rail de guidage (8) étant réduite par rapport à la distance dans la région de l'aimant (17).

17. Système de transport selon l'une quelconque des revendications 14 à 16, **caractérisé en ce qu'**au moins un élément de retenue commutable (19, 19') est disposé dans la région du premier rail de guidage (8), et est en mesure d'arrêter un dispositif de transport (1, 1').

18. Système de transport selon la revendication 17, **caractérisé en ce que** l'élément de retenue (19, 19') s'accroche à la partie de couplage (4, 4') ou à la partie de guidage (2, 2') ou à la partie de support (3).
